# EUROPÄISCHE PATENTSCHRIFT

(11) **EP 2 230 414 B1**
(45) Veröffentlichungstag und Bekanntmachung des Hinweises auf die Patenterteilung: **08.05.2013**
(21) Anmeldenummer: 10156886.3
(22) Anmeldetag: 18.03.2010
(51) Int. Cl.: F16D 3/04, F16D 3/06

(54) **Feste, flexible Kupplung zur Drehmomentübertragung**
Solid, flexible coupling for transferring torque
Accouplement fixe et flexible destiné à la transmission de couple

(30) Priorität: 18.03.2009 DE 102009013415
(43) Veröffentlichungstag der Anmeldung: 22.09.2010
(73) Patentinhaber: Siemens Aktiengesellschaft, 80333 München (DE)
(72) Erfinder: Ewald, Valtwies, 48691 Vreden (DE); Jürgen, Busmann, 48683 Ahaus (DE); Weiss, Rudolf, 48691 Vreden (DE)

(56) Entgegenhaltungen:
- DE-A1- 3 707 118
- DE-A1- 4 315 861
- FR-A1- 2 919 696

## Beschreibung

Die Erfindung betrifft eine feste, flexible Kupplung zur Drehmomentübertragung mit einem ersten Anschlusselement zum Anschluss eines ersten drehbaren Maschinenteils, einem zweiten Anschlusselement zum Anschluss eines zweiten drehbaren Maschinenteils und mindestens einem Zwischenstück, wobei das erste Anschlusselement über federelastische Laschen oder mindestens eine federelastische Lamelle mit dem Zwischenstück axialbeweglich in Bezug auf die Drehachse der Kupplung verbunden ist.

Flexible Kupplungen, d.h. Kupplungen, die während des Betriebs eine Beweglichkeit der gekuppelten Maschinenteile zulassen, sind in vielfältigen Ausführungen bekannt. In der Praxis haben sich insbesondere flexible Ganzstahlwellenkupplungen bewährt, deren beide jeweils einen Anschlussflansch aufweisende Kupplungshälften drehsteif, axial- und winkelbeweglich über mindestens einen Lamellenpaketkranz miteinander verbunden sind, wobei jeder Lamellenpaketkranz mittels umfangsmäßig verteilt angeordneter Befestigungs- und Spannelemente wechselweise an den beiden Anschlussflanschen befestigt ist. Werden die beiden >Kupplungshälften über jeweils einen Lamellenpaketkranz mit den Anschlussflanschen einer die beiden Kupplungshälften verbindenden Zwischenhülse verbunden, so lässt eine derartige Wellenkupplung sogar einen Radialversatz einer Antriebswelle gegenüber der zugeordneten Abtriebswelle zu (vgl. zum Beispiel DE 43 15 861 C2). Diese bekannten Wellenkupplungen, die einen Axial-, Winkel- und Radialversatz zulassen, benötigen jedoch relativ Platz.

Der vorliegenden Erfindung liegt die Aufgabe zugrunde, eine Kupplung der eingangs genannten Art bereitzustellen, die auch unter engen Platzverhältnissen sowohl einen Axialversatz als auch einen Radialversatz der Drehachsen der gekuppelten Maschinenteile zulässt.

Gelöst wird diese Aufgabe durch eine Kupplung mit den Merkmalen des Anspruchs 1.

Die erfindungsgemäße Kupplung umfasst ein erstes Anschlusselement zum Anschluss eines ersten drehbaren Maschinenteils, ein zweites Anschlusselement zum Anschluss eines zweiten drehbaren Maschinenteils und mindestens ein Zwischenstück, wobei das erste Anschlusselement über federelastische Laschen oder mindestens eine federelastische Lamelle mit dem mindestens einen Zwischenstück axialbeweglich in Bezug auf die Drehachse der Kupplung verbunden ist. Erfindungsgemäß ist das zweite Anschlusselement mit dem mindestens einen Zwischenstück radialbeweglich in Bezug auf die Drehachse der Kupplung oder des Zwischenstücks verbunden, wobei das mindestens eine Zwischenstück mit dem ersten Anschlusselement und/oder dem zweiten Anschlusselement in einer gemeinsamen, senkrecht zu der Drehachse der Kupplung liegenden Ebene angeordnet ist.

Die erfindungsgemäße Kupplung ermöglicht den Ausgleich einer axialen Verlagerung sowie einer radialen Verlagerung der Drehachsen der miteinander gekuppelten Maschinenteile und zeichnet sich zudem durch eine besonders kompakte Bauweise aus, so dass sie ihre Funktionen auch bei sehr begrenzten Bauraumverhältnissen ausüben kann.

Eine sehr kurze axiale Baulänge bzw. niedrige Bauhöhe lässt sich erreichen, wenn gemäß einer bevorzugten Ausgestaltung der erfindungsgemäßen Kupplung das erste Anschlusselement, das mindestens eine Zwischenstück und das zweite Anschlusselement in einer gemeinsamen, senkrecht zu der Drehachse der Kupplung liegenden Ebene angeordnet sind.

Um eine axiale Verlagerung (Versetzung) der durch die Kupplung gekuppelten Maschinenelemente zuzulassen, sieht eine bevorzugte Ausgestaltung der erfindungsgemäßen Kupplung vor, dass das erste Anschlusselement über mindestens einen federelastischen Lamellenkranz oder mindestens eine federelastische Ringlamelle mit dem mindestens einen Zwischenstück axialbeweglich verbunden ist, wobei der Lamellenkranz bzw. die Ringlamelle mittels umfangsmäßig verteilt angeordneter Befestigungsbolzen wechselweise an dem ersten Anschlusselement und dem mindestens einen Zwischenstück befestigt ist. Diese Ausgestaltung basiert auf einer bewährten Technik, die in zuverlässiger Weise einen Axialversatz gekuppelter Maschinenelemente zulässt.

Eine weitere bevorzugte Ausgestaltung der erfindungsgemäßen Kupplung ist **dadurch gekennzeichnet, dass** das zweite Anschlusselement mittels über seinen Umfang verteilt angeordneter federelastischer Laschen oder Lamellenpakete und damit verbundener Befestigungsbolzen an dem mindestens einen Zwischenstück befestigt ist. Auf diese Weise lässt sich eine wartungsfreie Kupplung realisieren, die auch unter engen Platzverhältnissen den erforderlichen Radialversatz der gekuppelten Maschinenelemente zulässt.

Ein besonders zuverlässiges Ausgleichsverhalten bezüglich einer radialen Verlagerung der Drehachsen gekuppelter Maschinenteile lässt sich erzielen, wenn gemäß einer weiteren bevorzugten Ausgestaltung der erfindungsgemäßen Kupplung die den Radialversatz zulassenden Laschen oder Lamellenpakete jeweils mit drei Befestigungsbolzen versehen sind, von denen ein mittig zu den beiden anderen Befestigungsbolzen angeordneter Befestigungsbolzen an dem zweiten Anschlusselement befestigt ist, während die beiden anderen Befestigungsbolzen an dem mindestens einen Zwischenstück befestigt sind.

Eine weitere vorteilhafte Ausgestaltung der erfindungsgemäßen Kupplung ist **dadurch gekennzeichnet, dass** das mindestens eine Zwischenstück ringförmig ausgebildet ist und einander abwechselnde bogenförmige und geradlinige Umfangsabschnitte aufweist. Das Zwischenstück kann aufgrund seiner Ringform relativ leicht und dennoch ausreichend robust ausgeführt werden. Dabei kann das Zwischenstück zugleich die Funktion eines Schutzringes übernehmen, der die einen Axialversatz zulassenden federelastischen Laschen bzw. eine zu diesem Zweck vorgesehene Ringlamelle vor äußeren mechanischen Einwirkungen schützt sowie im Falle eines eventuellen Laschen- oder Lamellenbruchs ein zentrifugalkraftbedingtes Wegfliegen von einzelnen Bruchstücken verhindert. Die geradlinigen Umfangsabschnitte des Zwischenstücks dienen der Anordnung von federelastischen Laschen oder Lamellen, welche die radiale Beweglichkeit des Zwischenstückes bezüglich des zweiten Anschlusselements sicherstellen. Diese Laschen bzw. Lamellen können somit ebenfalls geradlinig, d.h. im Wesentlichen eben ausgeführt und somit kostengünstig aus ebenen Federstahlblechen ausgestanzt werden.

Das mit dem mindestens einen Zwischenstück axialbeweglich verbundene erste Anschlusselement kann ebenfalls ringförmig ausgebildet sein. Vorzugsweise ist es kreisringförmig ausgebildet.

Hinsichtlich einer möglichst kurzen Baulänge bzw. niedrigen Bauhöhe der erfindungsgemäßen Kupplung ist es ferner günstig, wenn nach einer weiteren Ausgestaltung das erste Anschlusselement und/oder das zweite Anschlusselement parallel zur Drehachse der Kupplung verlaufende Gewindebohrungen aufweisen. In die Gewindebohrungen lassen sich Schraubbolzen zur Befestigung der zu kuppelnden Maschinenteile einschrauben.

Eine weitere vorteilhafte Ausgestaltung der erfindungsgemäßen Kupplung ist **dadurch gekennzeichnet, dass** das erste Anschlusselement und das zweite Anschlusselement über mindestens drei bolzen- oder hülsenartige Zwischenstücke miteinander verbunden sind, wobei das erste Anschlusselement und das zweite Anschlusselement mittels über den Umfang der Kupplung verteilt angeordneter federelastischer Laschen oder Lamellenpakete und damit verbundener Befestigungsbolzen an dem jeweiligen Zwischenstück befestigt sind.

Weitere bevorzugte und vorteilhafte Ausgestaltungen der erfindungsgemäßen Kupplung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine perspektivische Ansicht einer erfindungs- gemäßen Kupplung;
- Fig. 2: eine Draufsicht der Kupplung der Fig. 1;
- Fig. 3: eine Unteransicht der Kupplung der Fig. 1;
- Fig. 4: eine Schnittansicht der Kupplung entlang der Schnittlinie A-A in Fig. 3;
- Fig. 5: einen aus einer Vielzahl von Laschenlamellen gebildeten Lamellenpaketkranz, sowie eine einzelne Laschenlamelle, in Draufsicht;
- Fig. 6: eine Schnittansicht des Lamellenpaketkranzes entlang der Schnittlinie B-B in Fig. 5;
- Fig. 7: ein aus einer Vielzahl von Ringlamellen gebildetes Lamellenpaket, in Draufsicht;
- Fig. 8: eine Schnittansicht des Lamellenpakets entlang der Schnittlinie C-C in Fig. 7;
- Fig. 9: eine Explosionsdarstellung der Kupplung der Fig. 1;
- Fig. 10: eine perspektivische Darstellung eines aus einer Vielzahl von Laschenlamellen gebildeten Lamellen- pakets;
- Fig. 11: eine Draufsicht des Lamellenpakets der Fig. 10;
- Fig. 12: eine Schnittansicht des Lamellenpakets entlang der Schnittlinie A-A in Fig. 11;

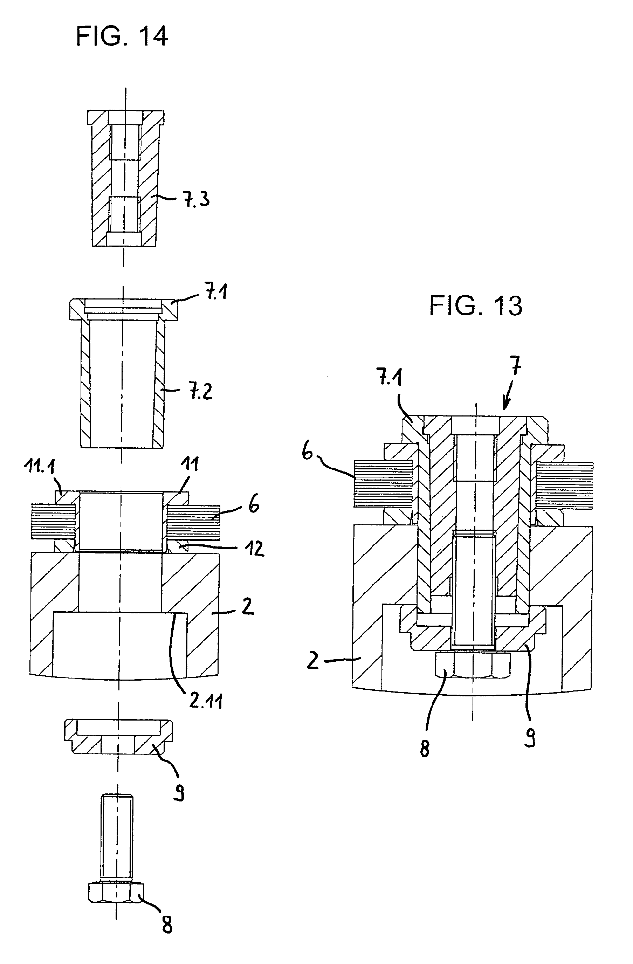

- Fig. 13: eine Schnittansicht eines Abschnitts des ersten Anschlusselements mit einem Befestigungsbolzen zur Befestigung eines Lamellenpakets bzw. -kranzes;
- Fig. 14: eine weitere Ansicht der Elemente der Fig. 13 in Explosionsdarstellung;
- Fig. 15: eine Draufsicht einer weiteren erfindungsgemäßen Kupplung; und

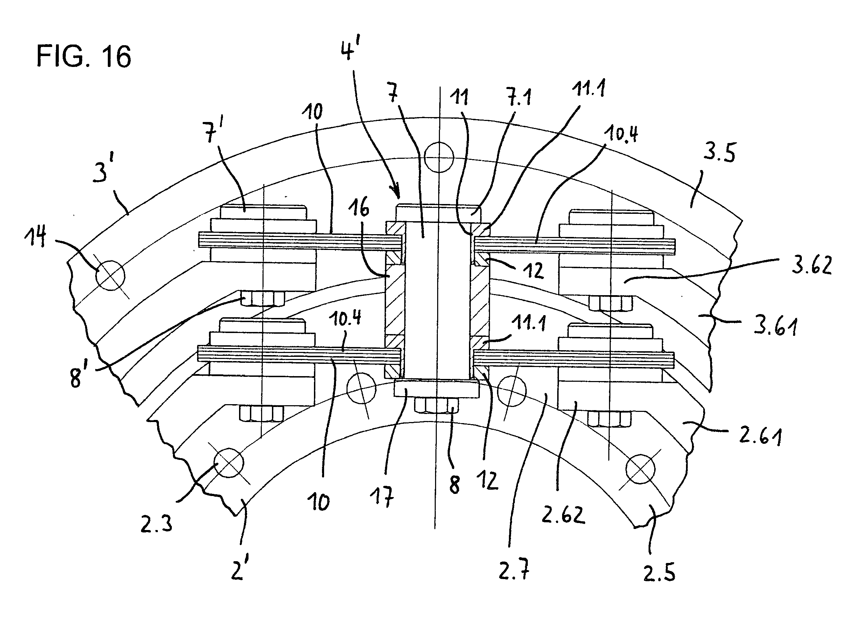

- Fig. 16: eine vergrößerte Darstellung eines Details der Fig. 15.

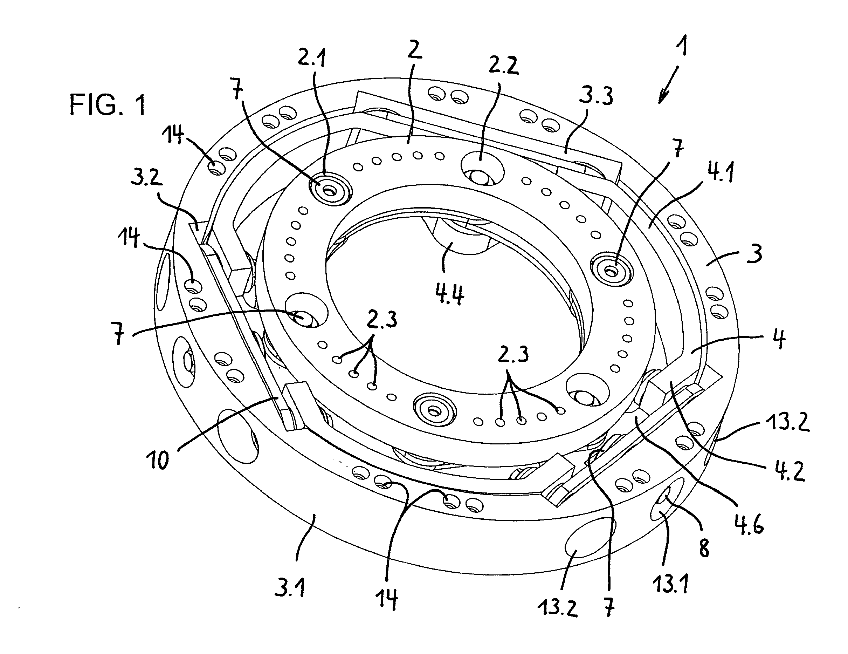

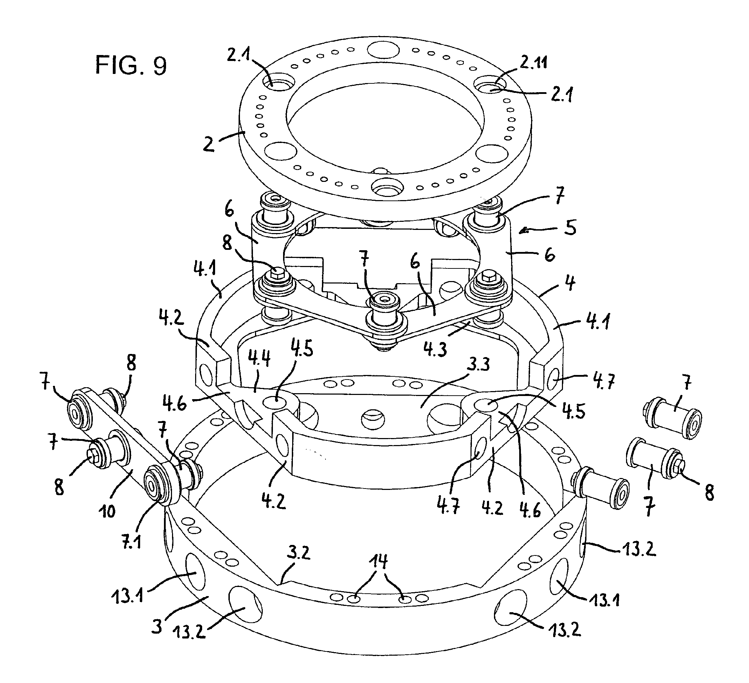

Die in Fig. 1 dargestellte Kupplung 1 dient der Drehmomentübertragung zwischen drehbaren Maschinenteilen. Es handelt sich um eine drehstarre, flexible Kupplung, die eine axiale Verlagerung, einen Winkelversatz und eine radiale Verlagerung der Drehachsen der durch die Kupplung 1 gekuppelten (nicht gezeigten) Maschinenteile zulässt. Die Kupplung 1 ist aus einem ersten Anschlusselement (Anschlussflansch) 2 zum Anschluss eines ersten drehbaren Maschinenteils, einem zweiten Anschlusselement 3 zum Anschluss eines zweiten drehbaren Maschinenteils und einem Zwischenstück 4 aufgebaut. Das erste bzw. innere Anschlusselement 2 ist über einen Lamellenpaketkranz 5, der aus einer Vielzahl federelastischer Laschenlamellen 6 gebildet ist, mit dem Zwischenstück 4 axialbeweglich verbunden (vgl. Fig. 9).

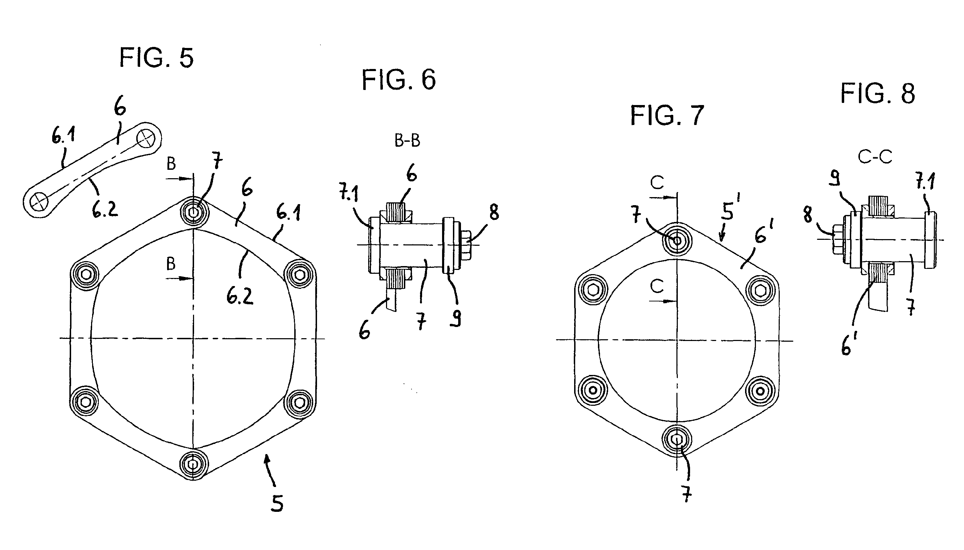

Mehrere Laschenlamellen 6 bilden dabei ein Lamellenpaket. In dem dargestellten Ausführungsbeispiel sind sechs Lamellenpakete miteinander ringförmig zu einem Lamellenpaketkranz 5 verbunden. Die einzelnen Laschenlamellen 6 haben eine geradlinige Außenkante 6.1 und eine konkav ausgebildete Innenkante 6.2, so dass der Lamellenpaketkranz 5 eine im Wesentlichen kreisringförmige Innenkontur aufweist (vgl. Fig. 5).

Das erste Anschlusselement 2 ist kreisringförmig ausgebildet und hat auf einem gemeinsamen Teilkreis angeordnete Bohrungen 2.1 zur Befestigung des Lamellenpaketkranzes 5. Das Zwischenstück 4 ist im Wesentlichen ringförmig ausgebildet und weist einander abwechselnde bogenförmige und geradlinige Umfangsabschnitte 4.1, 4.2 auf, die kragenförmig oder im Wesentlichen rechtwinklig von einem nach innen zur Drehachse der Kupplung 1 gerichteten Flansch 4.3 abstehen. Ferner weist das Zwischenstück 4 radial nach innen vorstehende Anschlussnasen 4.4 mit dem Lamellenpaketkranz 5 zugeordneten Befestigungsbohrungen 4.5 auf. Der jeweilige geradlinige Umfangsabschnitt des ringförmigen Zwischenstücks 4 ist mit einer Aussparung 4.6 versehen, wobei die Anschlussnasen 4.4 in radialer Flucht zu den Aussparungen 4.6 ausgebildet sind. Die Anschlussnasen 4.4 stehen gegenüber dem Flansch 4.3 des Zwischenstücks in Richtung des ersten Anschlusselements 2 hin vor. Der Lamellenpaketkranz 5 ist mittels umfangsmäßig verteilt angeordneter Befestigungsbolzen (Spannbolzen) 7 wechselweise an dem ersten Anschlusselement 2 und dem Zwischenstück 4 befestigt. Das erste Anschlusselement 2 erstreckt sich radial und mit Spiel in die Aussparungen 4.6 des Zwischenstücks 4.

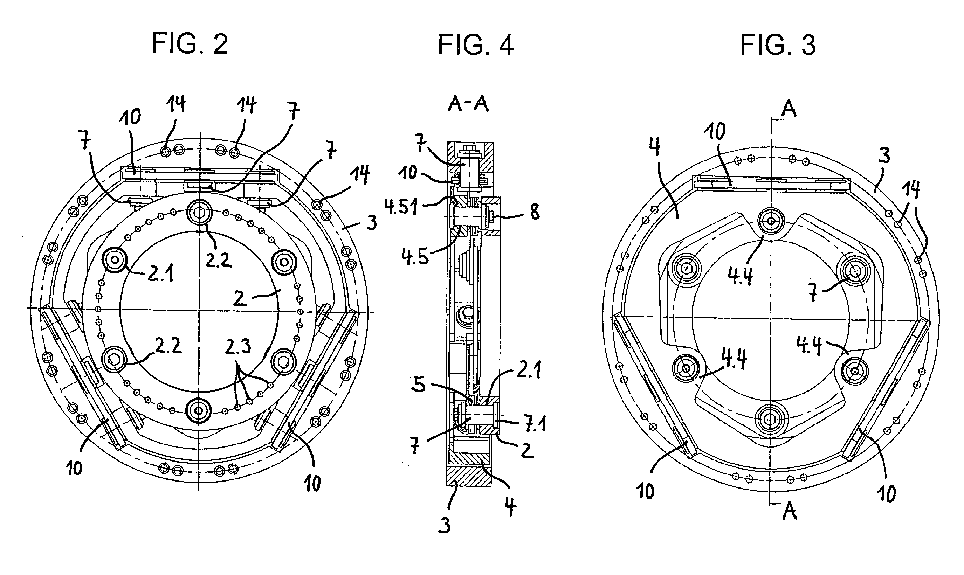

Die mit dem Anschlusselement (Anschlussflansch) 2 und dem Lamellenpaketkranz 5 verbundenen Befestigungsbolzen 7 sind jeweils in einer einen ringförmigen Absatz 2.11 aufweisenden Durchgangsbohrung 2.1 des Anschlusselements 2 axial festgelegt (vgl. Figuren 4 und 9). Der Befestigungsbolzen 7 ist aus einer Spannhülse 7.2 und einem in die Spannhülse 7.2 eingesteckten Spannbolzen 7.3 gebildet. Die Spannhülse 7.2 weist eine zylindrische Außenmantelfläche und eine konische Innenfläche auf. Die der Innenfläche der Spannhülse 7.2 zugeordnete Außenmantelfläche des Spannbolzens 7.3 ist ebenfalls konisch ausgebildet. Die Spannhülse 7.2 weist ferner einen durchmessererweiterten Kopf 7.1 auf, der im montierten Zustand an dem ringförmigen Absatz 2.11 der Durchgangsbohrung 2.1 anliegt. Der konisch ausgeführte Spannbolzen 7.3 ist mit einer Gewindebohrung versehen, in die eine Schraube 8, beispielsweise eine Sechskantschraube eingeschraubt ist.

Die zu einem Paket zusammengefassten Laschenlamellen 6 bzw. Ringlamellen 6' sind im Bereich ihrer Bohrungen durch eine im Wesentlichen zylindrischen Spannhülse 11 miteinander verbunden, in welche der Befestigungsbolzen 7 bzw. dessen einen Konussitz aufweisende Spannhülse 7.2 eingesteckt ist. Die zylindrische Spannhülse 11 weist einen sich radial nach außen erstreckenden Flansch auf. An dem dem Flansch 11.1 gegenüberliegenden Ende der zylindrischen Spannhülse 11 ist ein Abstandsring 12 aufgesteckt, der im montierten Zustand der Kupplung 1 zwischen dem ersten Anschlusselement 2 und dem Lamellenpaket 5 bzw. Lamellen 6, 6' eingespannt ist.

Der Befestigungsbolzen 7 ist ferner mit einer schalen- oder hutförmigen Ringscheibe 9 versehen, welche die den Konussitz definierende Spannhülse 7.2 radial übergreift und sich an dem Flansch der zylindrischen Spannhülse 11 abstützt, wenn die Sechskantschraube 8 angezogen wird, um den konischen Spannbolzen 7.3 in die Spannhülse 7.2 zu ziehen. Hierdurch werden die Spannhülsen 7.2, 11 radial geweitet, so dass die Lamellen 6, 6' spielfrei mit dem Anschlusselement 2 bzw. dem Zwischenstück 4 verbunden sind.

Die mit dem Zwischenstück 4 und dem Lamellenpaketkranz 5 verbundenen Befestigungsbolzen 7 sind jeweils an einer der Anschlussnasen 4.4, d.h. an einer der darin ausgebildeten Befestigungsbohrungen 4.5 axial festgelegt, wobei der durchmessererweiterte Kopf 7.1 der Spannhülse 7 wiederum an einem ringförmigen Absatz 4.51 der Befestigungsbohrung 4.5 anliegt und das gegenüberliegende Ende des Befestigungsbolzens 7 mit der darin eingeschraubten Schraube 8 mit Spiel in der Durchgangsbohrung 2.2 des ersten Anschlusselements 2 aufgenommen ist.

Des Weiteren ist das Anschlusselement 2 mit parallel zur Drehachse der Kupplung 1 verlaufenden Gewindebohrungen 2.3 versehen. Insbesondere in Fig. 2 ist zu sehen, dass die Gewindebohrungen 2.3 auf einem gemeinsamen Teilkreis und gruppenweise zwischen den Durchgangsbohrungen 2.1, 2.2 angeordnet sind, wobei die Gewindebohrungen 2.3 der jeweiligen Gruppe gleichmäßig zueinander beabstandet sind.

Das zweite bzw. äußere Anschlusselement 3 ist ebenfalls im Wesentlichen ringförmig ausgebildet. In dem in Fig. 1 dargestellten Ausführungsbeispiel besitzt es einen kreisringförmigen Außenumfang 3.1. Erfindungsgemäß ist das zweite Anschlusselement 3 mit dem Zwischenstück 4 radialbeweglich in Bezug auf die Drehachse des Zwischenstücks 4 bzw. der Kupplung 1 verbunden. Hierzu ist das zweite Anschlusselement 3 mittels über seinen Umfang verteilt angeordneter federelastischer Laschen 10 und damit verbundener Befestigungsbolzen (Spannbolzen) 7 an dem Zwischenstück 4 befestigt. Aus den Laschenlamellen 10 sind drei gleichmäßig über den Umfang des zweiten Anschlusselements 3 angeordnete Lamellenpakete gebildet.

In dem in Fig. 9 dargestellten Ausführungsbeispiel sind die Laschen oder Lamellenpakete 10 jeweils mit drei Befestigungsbolzen 7 versehen, von denen ein mittig zu den beiden anderen Befestigungsbolzen 7 angeordneter Befestigungsbolzen an dem zweiten Anschlusselement 3 befestigt ist, während die beiden anderen Befestigungsbolzen 7 an dem Zwischenstück 4 befestigt sind.

Das Zwischenstück 4 weist hierzu an seinen geradlinigen Umfangsabschnitten 4.2 jeweils zwei Durchgangsbohrungen 4.7 auf, zwischen denen die Aussparung (Ausnehmung) 4.6 angeordnet ist. Den geradlinigen Umfangsabschnitten 4.2 des Zwischenstücks 4 liegen im Innenumfang des zweiten Anschlusselements 3 ausgebildete Vertiefungen 3.2 gegenüber, die eine im Wesentlichen ebene Innenfläche 3.3 aufweisen. Der jeweilige geradlinige Umfangsabschnitt 4.2 des Zwischenstücks 4 und die zugeordnete ebene Innenfläche 3.3 der gegenüberliegenden Vertiefung 3.2 des äußeren Anschlusselements 3 begrenzen eine längliche, im Wesentlichen geradlinige Ausnehmung zur Aufnahme eines der einen Radialversatz zulassenden Laschenlamellenpakete 10.

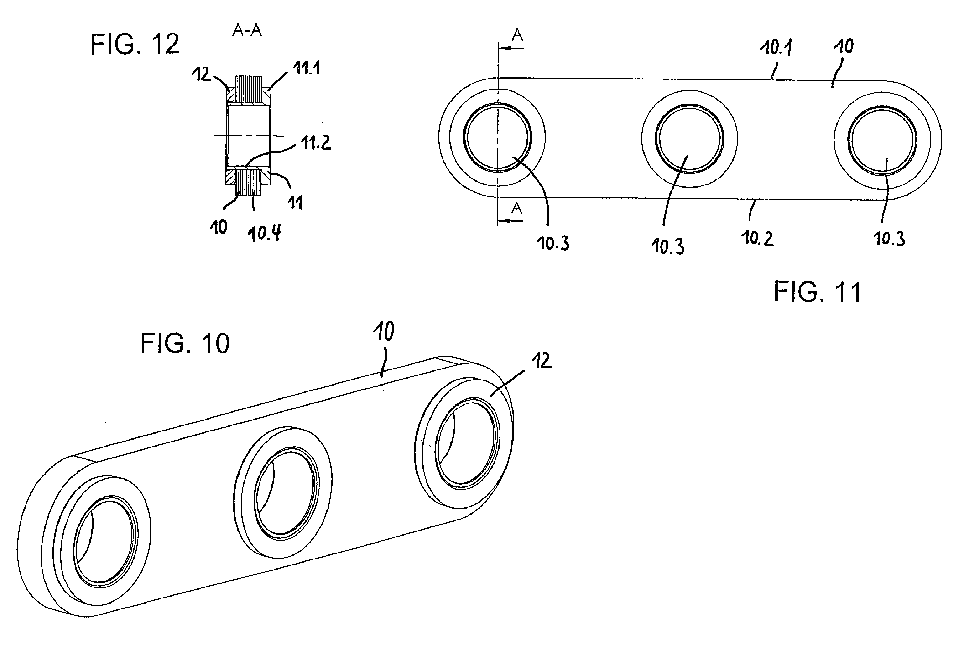

Die mit den geradlinigen Laschenlamellenpaketen 10 verbundenen Befestigungsbolzen 7 entsprechenden vorzugsweise den mit dem ersten Anschlusselement verbundenen Befestigungsbolzen, d.h. die in der Kupplung zur Befestigung des Lamellenpaketkranzes 5 und der Laschenlamellenpaketen 10 verwendeten Befestigungsbolzen (Spannbolzen) 7 sind untereinander identisch oder baugleich. Die Figuren 10 bis 12 zeigen, dass die Laschenlamellen 10.4 der Laschenlamellenpakete 10 jeweils geradlinige Längskanten 10.1, 10.2 und drei Durchgangsbohrungen 10.3 aufweisen. Die Mittelpunkte der drei Durchgangsbohrungen 10.3 liegen auf einer gemeinsamen Geraden. In die jeweilige Durchgangsbohrung 10.3 ist eine einen kreisringförmigen Flansch 11.1 oder Bund aufweisende Spannbuchse 11 eingesetzt, wobei auf der dem Flansch bzw. Bund 11.1 gegenüberliegenden Seite ein Spannring 12 auf die Spannbuchse 11 aufgesteckt ist. Die Laschenlamellen 10.4 des jeweiligen Laschenpakets 10 sind zwischen dem Flansch 11.1 der Spannbuchse 11 und dem Spannring 12 eingespannt, wobei die axiale Länge des hülsenförmigen Abschnitts 11.2 der Spannbuchse 11 kürzer ist als das Maß, das sich aus der Summe der Dicke des darauf aufgesteckten Lamellenpakets 10 und der Dicke des Spannringes 12 ergibt.

Der mittlere Befestigungsbolzen 7 des einen Radialversatz zulassenden Laschenlamellenpakets 10 ist in eine abgestufte Durchgangsbohrung 13.1, welche das äußere Anschlusselement 3 radial durchläuft, eingesetzt und an dem Absatz mittels der Unterlegscheiben 9 und der Sechskantschraube 8 festgelegt. Neben dieser Durchgangsbohrung 13.1 sind in dem äußeren Anschlusselement 3 zwei den anderen beiden Befestigungsbolzen 7 des Laschenlamellenpakets 10 zugeordnete Durchgangsbohrungen 13.2 ausgebildet, die parallel zu der mittleren Durchgangsbohrung 13.1 verlaufen und die durchmessererweiterten Köpfe 7.1 der Befestigungsbolzen 7 mit Spiel aufnehmen.

Auch das äußere Anschlusselement 3 ist mit parallel zur Drehachse der Kupplung verlaufenden Gewindebohrungen 14 versehen, die auf einem gemeinsamen Teilkreis angeordnet sind.

Im montierten Zustand ist das erste Anschlusselement 2 innerhalb der von dem Flansch 4.3 und den kragenförmigen Umfangsabschnitten 4.1, 4.2 definierten Vertiefung des Zwischenstück 4 axialbeweglich aufgenommen. Das Anschlusselement 2 greift somit in das Zwischenstück 4 ein. In Fig. 4 ist zu erkennen, dass das kreisringförmige Anschlusselement 2 mit seiner dem Lamellenpaketkranz 5 abgewandten Seite gegenüber dem Zwischenstück 4 sowie dem zweiten Anschlusselement 3 in axialer Richtung vorsteht. Das erste Anschlusselement 2, das Zwischenstück 4 und das zweite Anschlusselement 3 sind dabei in einer gemeinsamen, senkrecht zu der Drehachse der Kupplung 1 liegenden Ebene angeordnet (vgl. insbesondere Fig. 4).

Wie in den Figuren 7 und 8 dargestellt, kann in der erfindungsgemäßen Kupplung 1 anstelle eines aus versetzten Laschenlamellen gebildeten Lamellenpaketkranzes alternativ auch ein aus mehreren Ringlamellen 6' gebildetes Lamellenpaket 5' zum Einsatz kommen. Die Ringlamellen 6' weisen eine im Wesentlichen hexagonale Außenkontur mit sechs geradlinigen Außenkanten und einen kreisrunde Innendurchmesser auf. Die erfindungsgemäße Kupplung 1 ist vorzugsweise als Ganzstahlkupplung ausgeführt.

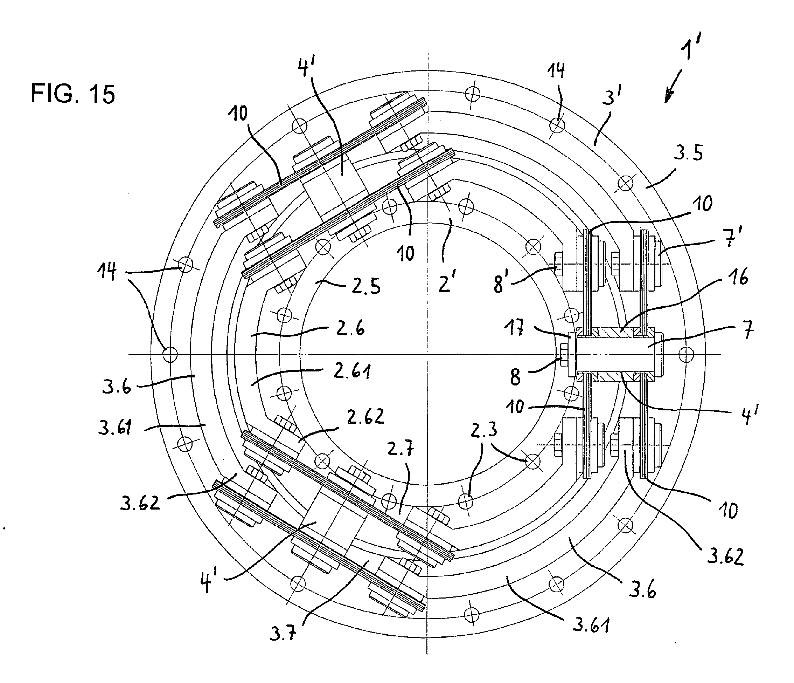

In Fig. 15 ist ein weiteres Ausführungsbeispiel einer erfindungsgemäßen Kupplung gezeigt. Auch bei dieser Kupplung handelt es sich um eine drehstarre, flexible Kupplung, die eine axiale Verlagerung, einen Winkelversatz und eine radiale Verlagerung der Drehachsen der gekuppelten (nicht gezeigten) Maschinenteile zulässt. Die Kupplung 1' ist aus einem ersten Anschlusselement (Anschlussflansch) 2' zum Anschluss eines ersten drehbaren Maschinenteils, einem zweiten Anschlusselement 3' zum Anschluss eines zweiten drehbaren Maschinenteils und Zwischenstücken 4' aufgebaut.

Das erste bzw. innere Anschlusselement 2' ist ringförmig ausgebildet und umfasst einen Anschlussflansch 2.5. Der Anschlussflansch 2.5 weist mehrere Befestigungsbohrungen 2.3 auf, die gleichmäßig voneinander beabstandet auf einem gemeinsamen Teilkreis angeordnet sind. Die Befestigungsbohrungen 2.3 dienen dem Anschluss eines ersten drehbaren Maschinenteils (nicht gezeigt) und sind vorzugsweise als Gewindebohrungen ausgebildet.

An dem Anschlusselement 2' sind Stege bzw. Stegabschnitte 2.6 ausgebildet. Die Stegabschnitte 2.6 sind einstückig an dem Anschlussflansch 2.5 angeformt. Sie weisen einander abwechselnde bogenförmige Stegabschnitte 2.61 und geradlinige Stegabschnitte 2.62 auf. In den geradlinigen Stegabschnitten 2.62 sind Aussparungen 2.7 ausgebildet. Die die Aussparungen 2.7 begrenzenden Stegabschnitte 2.62 sind mit Befestigungsbohrungen versehen.

Das zweite bzw. äußere Anschlusselement 3' ist ähnlich dem inneren Anschlusselement 2' ausgebildet. Es ist ebenfalls ringförmig ausgebildet und umfasst einen Anschlussflansch 3.5. Der Anschlussflansch 3.5 weist mehrere Befestigungsbohrungen 14 auf, die auf einem gemeinsamen Teilkreis in unterschiedlichen Abständen voneinander angeordnet sind. Die Befestigungsbohrungen 14 dienen dem Anschluss eines zweiten drehbaren (nicht gezeigten) Maschinenteils. Sie sind vorzugsweise als Gewindebohrungen ausgebildet.

Auch an dem äußeren Anschlusselement 3' sind Stege bzw. Stegabschnitte 3.6 ausgebildet. Die Stegabschnitte 3.6 sind an bzw. nahe dem Innenumfang des äußeren Anschlusselements 3' angeordnet, während die Stegabschnitte 2.6, 2.61, 2.62 des inneren Anschlusselements 2' an bzw. nahe dem Außenumfang des inneren Anschlusselements 2' angeordnet sind.

Die axial von dem Anschlussflansch 3.5 abstehenden Stegabschnitte 3.6 sind einstückig mit diesem ausgebildet. Sie weisen ebenfalls einander abwechselnde bogenförmige und geradlinige Stegabschnitte 3.61, 3.62 auf, wobei die geradlinigen Stegabschnitte 3.62 mit Aussparungen 3.7 versehen sind. Die die Aussparungen 3.7 begrenzenden Stegabschnitte 3.62 sind wiederum mit Befestigungsbohrungen versehen.

Das Anschlusselement 2' und das Anschlusselement 3' sind über federelastische Lamellenpakete 10 und die Zwischenstücke 4' miteinander verbunden. Die Lamellenpakete 10 sind jeweils aus mehreren laschenförmigen Lamellen 10.4 gebildet, die vorzugsweise aus Federstahl hergestellt sind. Die Lamellenpakete 10 und Zwischenstücke 4' sind über den Umfang des ringförmigen Anschlusselements 2' bzw. Anschlusselements 3' gleichmäßig verteilt angeordnet.

Die federelastischen Lamellen (Laschen) 10.4 weisen jeweils drei Bohrungen auf. Zwei dieser Bohrungen sind nahe den Enden der Lamellen 10.4 vorgesehen, während die dritte Bohrung in der Mitte der jeweiligen Lamelle 10.4 angeordnet ist.

An den mittleren Bohrungen der Lamellen (Laschen) 10.4 sind die Zwischenstücke 4' montiert. Jedes der Zwischenstücke 4' verbindet zwei Laschenlamellenpakete 10, wobei das eine bzw. erste Laschenlamellenpaket 10 mit den Stegabschnitten 2.62 des inneren Anschlusselements 2' verbunden ist, während das andere bzw. zweite Laschenlamellenpaket 10 mit den Stegabschnitten 3.62 des äußeren Anschlusselement 3' verbunden ist. Die Ausbildung der Laschenlamellenpakete 10 entspricht dem in den Figuren 10 bis 12 dargestellten Laschenlamellenpaket 10, so dass zur Vermeidung von Wiederholungen auf die obige Figurenbeschreibung verwiesen wird.

Die Laschenlamellenpakete 10 sind mit den Stegabschnitten 2.62, 3.62 verschraubt. Hierzu sind Spannbolzen (Befestigungsbolzen) 7' vorgesehen, die Gewindebohrungen aufweisen, in die Schrauben 8', beispielsweise Sechskantschrauben eingeschraubt sind.

Das jeweilige Zwischenstück 4' ist aus einem Spannbolzen 7 und einer von dem Spannbolzen 7 durchdrungenen Hülse 16 gebildet. Der Spannbolzen 7 weist einen durchmessererweiterten Kopf 7.1 und eine am gegenüberliegenden Ende angeordnete Gewindebohrung auf, in die eine Spannschraube 8 eingeschraubt ist. Ferner sind auf den Spannbolzen 7 Spannbuchsen 11 aufgesteckt, die einen Bund oder Flansch 11.1 aufweisen. Auf die Spannbuchsen 11 sind wiederum Spannringe 12 aufgesteckt. Die Lamellen (Laschen) 10.4 sind zwischen dem Flansch 11.1 der Spannbuchse 11 und dem zugeordneten Spannring 12 eingespannt. Der Flansch 11.1 und der dem benachbarten Lamellenpaket 10 zugeordnete Spannring 12 liegen dabei an den Stirnseiten (Enden) der Hülse 16 an, während der Kopf der Spannschraube 8 an einer Unterlegscheibe 17 anliegt, die den Spannbolzen 7 radial überragt und sich ihrerseits an dem dem Lamellenpaket 10 zugeordneten Spannring 12 abstützt.

Das Anschlusselement 2' ist über die federelastischen Laschenlamellenpakete 10 mit den Zwischenstücken 4' axialbeweglich in Bezug auf die Drehachse der Kupplung 1' verbunden. Zugleich ist das zweite Anschlusselement 3' über die federelastischen Laschenlamellenpakete 10 mit den Zwischenstücken 4' radialbeweglich in Bezug auf die Drehachse der Kupplung 1' verbunden, wobei die Zwischenstücke 4' mit dem ersten Anschlusselement 2' und dem zweiten Anschlusselement 3' in einer gemeinsamen, senkrecht zur Drehachse der Kupplung 1' liegenden Ebene angeordnet sind.

Die Erfindung ist in ihrer Ausführung nicht auf die vorstehend dargestellten Ausführungsbeispiele beschränkt. Vielmehr sind zahlreiche Varianten möglich, die auch bei abweichender Gestaltung von der in den beiliegenden Ansprüchen angegebenen Erfindung Gebrauch machen. Beispielsweise kann anstelle des Befestigungsbolzens, dessen konischer Spannbolzen eine Gewindebohrung aufweist, auch ein Befestigungsbolzen verwendet werden, dessen konischer Spannbolzen an seinem dem durchmessererweiterten Kopf der Spannhülse gegenüberliegenden Ende ein als Gewindeschaft ausgebildetes Ende aufweist, auf das eine Mutter aufgeschraubt ist.

## Patentansprüche

1. Feste, flexible Kupplung (1, 1') zur Drehmomentübertragung mit einem ersten Anschlusselement (2, 2') zum Anschluss eines ersten drehbaren Maschinenteils, einem zweiten Anschlusselement (3, 3') zum Anschluss eines zweiten drehbaren Maschinenteils und mindestens einem Zwischenstück (4, 4'), wobei das erste Anschlusselement (2, 2') über federelastische Laschen (6, 10.4) oder mindestens eine federelastische Lamelle (6') mit dem mindestens einen Zwischenstück (4, 4') axialbeweglich in Bezug auf die Drehachse der Kupplung (1, 1') verbunden ist,
**dadurch gekennzeichnet, dass** das zweite Anschlusselement (3, 3') mit dem mindestens einen Zwischenstück (4, 4') radialbeweglich in Bezug auf die Drehachse der Kupplung verbunden ist, wobei das mindestens eine Zwischenstück (4) mit dem ersten Anschlusselement (2, 2') und/oder dem zweiten Anschlusselement (3, 3') in einer gemeinsamen, senkrecht zu der Drehachse liegenden Ebene angeordnet ist.

2. Kupplung nach Anspruch 1,
**dadurch gekennzeichnet, dass** das erste Anschlusselement (2, 2'), das mindestens eine Zwischenstück (4, 4') und das zweite Anschlusselement (3, 3') in einer gemeinsamen, senkrecht zu der Drehachse der Kupplung (1, 1') liegenden Ebene angeordnet sind.

3. Kupplung nach Anspruch 1 oder 2,
**dadurch gekennzeichnet, dass** das zweite Anschlusselement (3, 3') mittels über seinen Umfang verteilt angeordneter federelastischer Laschen oder Lamellenpakete (10) und damit verbundener Befestigungsbolzen (7) an dem mindestens einen Zwischenstück (4, 4') befestigt ist.

4. Kupplung nach Anspruch 3,
**dadurch gekennzeichnet, dass** die Laschen oder Lamellenpakete (10) jeweils mit mindestens drei Befestigungsbolzen (7) versehen sind, von denen ein mittig zu den beiden anderen Befestigungsbolzen (7) angeordneter Befestigungsbolzen (7) an dem zweiten Anschlusselement (3, 3') befestigt ist, während die beiden anderen Befestigungsbolzen (7) an dem mindestens einen Zwischenstück (4, 4') befestigt sind.

5. Kupplung nach einem der Ansprüche 1 bis 3,
**dadurch gekennzeichnet, dass** das erste Anschlusselement (2, 2') und/oder das zweite Anschlusselement (3, 3') parallel zur Drehachse der Kupplung (1, 1') verlaufende Gewindebohrungen (2.3, 14) aufweisen.

6. Kupplung nach einem der Ansprüche 1 bis 5,
**dadurch gekennzeichnet, dass** das erste Anschlusselement (2) über mindestens einen federelastischen Lamellenkranz (5) oder mindestens eine federelastische Ringlamelle (6') mit dem mindestens einen Zwischenstück (4) axialbeweglich verbunden ist, wobei der Lamellenkranz (5) oder die Ringlamelle (6') mittels umfangsmäßig verteilt angeordneter Befestigungsbolzen (7) wechselweise an dem ersten Anschlusselement (2) und dem mindestens einen Zwischenstück (4) befestigt ist.

7. Kupplung nach einem der Ansprüche 1 bis 6,
**dadurch gekennzeichnet, dass** das zweite Anschlusselement (3, 3') ringförmig ausgebildet ist, wobei das mindestens eine Zwischenstück (4, 4') innerhalb des Umfangs des zweiten Anschlusselements (3, 3') angeordnet ist.

8. Kupplung nach einem der Ansprüche 1 bis 7,
**dadurch gekennzeichnet, dass** das erste Anschlusselement (2) ringförmig ausgebildet ist und innerhalb einer Vertiefung des mindestens einen Zwischenstücks (4) axialbeweglich aufgenommen ist.

9. Kupplung nach einem der Ansprüche 1 bis 8,
**dadurch gekennzeichnet, dass** das mindestens eine Zwischenstück (4) ringförmig ausgebildet ist und einander abwechselnde bogenförmige und geradlinige Umfangsabschnitte (4.1, 4.2) aufweist.

10. Kupplung nach einem der Ansprüche 1 bis 9,
**dadurch gekennzeichnet, dass** das mindestens eine Zwischenstück (4) einen radial nach innen vorstehenden Flansch (4.3) und/oder radial nach innen vorstehende Anschlussnasen (4.4) aufweist.

11. Kupplung nach den Ansprüchen 9 und 10,
**dadurch gekennzeichnet, dass** die Anschlussnasen (4.4) in radialer Flucht zu den Aussparungen (4.6) ausgebildet sind.

12. Kupplung nach einem der Ansprüche 1 bis 3 oder 5,
**dadurch gekennzeichnet, dass** das erste Anschlusselement (2') und das zweite Anschlusselement (3') über mindestens drei bolzen- oder hülsenartige Zwischenstücke (4') miteinander verbunden sind, wobei das erste Anschlusselement (2') und das zweite Anschlusselement (3') mittels über den Umfang der Kupplung verteilt angeordneter federelastischer Laschen oder Lamellenpakete (10) und damit verbundener Befestigungsbolzen (7) an dem jeweiligen Zwischenstück (4') befestigt sind.

13. Kupplung nach einem der Ansprüche 1 bis 3, 5 oder 12,
**dadurch gekennzeichnet, dass** erste Anschlusselement (2') und/oder das zweite Anschlusselement (3') ringförmig ausgebildet ist und einander abwechselnde bogenförmige (2.61; 3.61) und geradlinige Stegabschnitte (2.62; 3.62) aufweist.

14. Kupplung nach Anspruch 13,
**dadurch gekennzeichnet, dass** der jeweilige geradlinige Stegabschnitt (2.62; 3.62) eine Aussparung (2.7; 3.7) aufweist.

15. Kupplung nach einem der Ansprüche 12 bis 14,
**dadurch gekennzeichnet, dass** das jeweilige Zwischenstück (4') aus einem Spannbolzen (7) und einer von dem Spannbolzen (7) durchdrungenen Hülse (16) gebildet ist.

## Claims

1. Fixed, flexible coupling (1, 1') for transmitting torque having a first connecting element (2, 2') for connecting a first rotatable machine part, a second connecting element (3, 3') for connecting a second rotatable machine part and at least one intermediate piece (4, 4'), wherein the first connecting element (2, 2') is connected in an axially moveable manner to the at least one intermediate piece (4, 4') in respect of the axis of rotation of the coupling (1, 1') via spring-elastic lugs (6, 10.4) or at least one spring-elastic disk (6'),
**characterized in that**
the second connecting element (3, 3') is connected to the at least one intermediate piece (4, 4') in a radial moveable manner in respect of the axis of rotation of the coupling, wherein the at least one intermediate piece (4) is arranged with the first connecting element (2, 2') and/or the second connecting element (3, 3') in a shared plane disposed at a right angle to the axis of rotation.

2. Coupling according to claim 1,
**characterized in that**
the first connecting element (2, 2'), the at least one intermediate piece (4, 4') and the second connecting element (3, 3') are arranged in a shared plane disposed at a right angle to the axis of rotation of the coupling (1, 1').

3. Coupling according to claim 1 or 2,
**characterized in that**
the second connecting element (3, 3') is fastened to the at least one intermediate piece (4, 4') by means of spring-elastic tabs or disk sets (10) arranged in a distributed manner across its periphery and fastening bolts (7) connected thereto.

4. Coupling according to claim 3,
**characterized in that**
the tabs or disk sets (10) are each provided with at least three fastening bolts (7), of which a fastening bolt (7) arranged centrally relative to the two other fastening bolts (7) is fastened to the second connecting element (3, 3'), while the two other fastening bolts (7) are fastened to the at least one intermediate piece (4, 4').

5. Coupling according to one of claims 1 to 3,
**characterized in that**
the first connecting element (2, 2') and/or the second connecting element (3, 3') have threaded holes (2.3, 14) running in parallel relative to the axis of rotation of the coupling (1, 1').

6. Coupling according to one of claims 1 to 5,
**characterized in that**
the first connecting element (2) is connected to the at least one intermediate piece (4) in an axially moveable manner by way of at least one spring-elastic disk crown (5) or at least one spring-elastic annular disk (6'), wherein the disk crown (5) or the annular disk (6') is fastened to the first connecting element (2) and the at least one intermediate piece (4) alternately by means of fastening bolts (7) arranged in a distributed manner over the periphery.

7. Coupling according to one of claims 1 to 6,
**characterized in that**
the second connecting element (3, 3') is embodied to be annular, wherein the at least one intermediate piece (4, 4') is arranged within the periphery of the second connecting element (3, 3').

8. Coupling according to one of claims 1 to 7,
**characterized in that**
the first connecting element (2) is embodied to be annular and is received in an axially moveable manner within a depression of the at least one intermediate piece (4).

9. Coupling according to one of claims 1 to 8,
**characterized in that**
the at least one intermediate piece (4) is embodied to be annular and has arched and straight peripheral sections (4.1, 4.2) which alternate with one another.

10. Coupling according to one of claims 1 to 9,
**characterized in that**
the at least one intermediate piece (4) has a flange (4.3) protruding radially inwards and/or connecting lugs (4. 4) protruding radially inwards.

11. Coupling according to claims 9 to 10,
**characterized in that**
the connecting lugs (4.4) are embodied radially flush with the recesses (4, 6).

12. Coupling according to one of claims 1 to 3 or 5,
**characterized in that**
the first connecting element (2') and the second connecting element (3') are connected to one another by way of at least three bolt or sleeve-type intermediate pieces (4'), wherein the first connecting element (2') and the second connecting element (3') are fastened to the respective intermediate piece (4') by means of spring-elastic lugs or disk sets (10) arranged in a distributed manner across the periphery of the coupling and fastening bolts (7) connected thereto.

13. Coupling according to one of claims 1 to 3, 5 or 12,
**characterized in that**
first connecting element (2') and/or the second connecting element (3') is embodied to be annular, and has alternating arched (2.61; 3.61) and straight web sections (2.62; 3.62) relative to one another.

14. Coupling according to claim 13,
**characterized in that**
the respective straight web section (2.62; 3.62) comprises a recess (2.7; 3.7).

15. Coupling according to one of claims 12 to 14,
**characterized in that**
the respective intermediate piece (4') is formed of a fastening bolt (7) and a sleeve (16) permeated by the fastening bolt (7).

## Revendications

1. Accouplement (1, 1') fixe et flexible pour la transmission d'un couple de rotation, comprenant un premier élément (2, 2') de connexion pour la connexion d'une première partie tournante de machine, un deuxième élément (3, 3') de connexion pour la connexion d'une deuxième partie tournante de machine et au moins une pièce (4, 4') intermédiaire, le premier élément (2, 2') de connexion étant relié de manière mobile axialement par rapport à l'axe de rotation de l'accouplement (1, 1') à la au moins une pièce (4, 4') intermédiaire par des joncs (6, 10.4) ayant une élasticité de ressort ou par au moins une lamelle (6') ayant une élasticité de ressort,
**caractérisé en ce que** le deuxième élément (3, 3') de connexion est relié d'une manière mobile radialement par rapport à l'axe de rotation de l'accouplement à la au moins une pièce (4, 4') intermédiaire, la au moins une pièce (4) intermédiaire étant disposée avec le premier élément (2, 2') de connexion et/ou le deuxième élément (3, 3') de connexion dans un plan commun perpendiculaire à l'axe de rotation.

2. Accouplement suivant la revendication 1,
**caractérisé en ce que** le premier élément (2, 2') de connexion, la au moins une pièce (4, 4') intermédiaire et le deuxième élément (3, 3') de connexion sont disposés dans un plan commun perpendiculaire à l'axe de rotation de l'accouplement (1, 1').

3. Accouplement suivant la revendication 1 ou 2,
**caractérisé en ce que** le deuxième élément (3, 3') de connexion est fixé à la au moins une pièce (4, 4') intermédiaire au moyen de joncs ou de paquets (10) de lamelles ayant une élasticité de ressort répartis sur son pourtour et de boulons (7) de fixation, qui y sont reliés.

4. Accouplement suivant la revendication 3,
**caractérisé en ce que** les joncs ou les paquets (10) de lamelles sont pourvus respectivement d'au moins trois boulons (7) de fixation, dont l'un (7) disposé au milieu des deux autres boulons (7) de fixation est fixé au deuxième élément (3, 3') de connexion, tandis que les deux autres boulons (7) de fixation sont fixés à la au moins une pièce (4, 4') intermédiaire.

5. Accouplement suivant l'une des revendications 1 à 3,
**caractérisé en ce que** le premier élément (2, 2') de connexion et/ou le deuxième élément (3, 3') de connexion ont des taraudages (2.3, 14) s'étendant parallèlement à l'axe de rotation de l'accouplement (1, 1').

6. Accouplement suivant l'une des revendications 1 à 5,
**caractérisé en ce que** le premier élément (2) de connexion est relié d'une manière mobile axialement à la au moins une pièce (4) intermédiaire par au moins une couronne (5) de lamelles ayant une élasticité de ressort ou par au moins une lamelle (6') annulaire ayant une élasticité de ressort, la couronne (5) de lamelle ou la lamelle (6') annulaire étant fixée au moyen de boulons (7) de fixation répartis sur le pourtour en alternance au premier élément (2) de connexion et à la au moins une pièce (4) intermédiaire.

7. Accouplement suivant l'une des revendications 1 à 6,
**caractérisé en ce que** le deuxième élément (3, 3') de connexion est de forme annulaire, la au moins une pièce (4, 4') intermédiaire étant disposée à l'intérieur du pourtour du deuxième élément (3, 3') de connexion.

8. Accouplement suivant l'une des revendications 1 à 7,
**caractérisé en ce que** le premier élément (2) de connexion est de forme annulaire et est logé de manière mobile axialement à l'intérieur d'une cavité de la au moins une pièce (4) intermédiaire.

9. Accouplement suivant l'une des revendications 1 à 8,
**caractérisé en ce que** la au moins une pièce (4) intermédiaire est de forme annulaire et a des parties (4.1, 4.2) périphériques arquées et rectilignes en alternance.

10. Accouplement suivant l'une des revendications 1 à 9,
**caractérisé en ce que** la au moins une pièce (4) intermédiaire a une bride (4.3) en saillie radialement vers l'intérieur et/ou des becs (4.4) de connexion en saillie radialement vers l'intérieur.

11. Accouplement suivant les revendications 9 et 10,
**caractérisé en ce que** les becs (4.4) de connexion sont formés en alignement radial avec des évidements (4.6).

12. Accouplement suivant l'une des revendications 1 à 3 ou 5,
**caractérisé en ce que** le premier élément (2') de connexion et le deuxième élément (3') de connexion sont reliés entre eux par au moins trois pièces (4') intermédiaires de type en boulon ou en douille, le premier élément (2') de connexion et le deuxième élément (3') de connexion étant fixés à la pièce (4') intermédiaire respective par des joncs ayant une élasticité de ressort répartis sur le pourtour de l'accouplement ou par des paquets (10) de lamelle et par des boulons (7) de fixation, qui y sont reliés.

13. Accouplement suivant l'une des revendications 1 à 3, 5 ou 12,
**caractérisé en ce que** le premier élément (2') de connexion et/ou le deuxième élément (3') de connexion est annulaire et a des parties de barrettes arquées (2.61, 3.61) et rectilignes (2.62, 3.62).

14. Accouplement suivant la revendication 13,
**caractérisé en ce que** la partie (2.62, 3.62) de barrettes rectilignes a un évidement (2.7, 3.7).

15. Accouplement suivant l'une des revendications 12 à 14,
**caractérisé en ce que** la pièce (4') intermédiaire est formée d'une goupille (7) de serrage et d'une douille (16) traversée par la goupille (7) de serrage.
